# EUROPEAN PATENT SPECIFICATION

(11) **EP 4 030 823 B1**
(45) Date of publication and mention of the grant of the patent: **10.09.2025**
(21) Application number: 20867920.9
(22) Date of filing: 25.09.2020
(51) Int. Cl.: H04W 36/00

(54) **CELL HANDOVER METHOD AND DEVICE**
ZELLÜBERGABEVERFAHREN UND -VORRICHTUNG
PROCÉDÉ ET DISPOSITIF DE TRANSFERT INTERCELLULAIRE

(30) Priority: 26.09.2019 CN 201910920053
(43) Date of publication of application: 20.07.2022
(73) Proprietor: Huawei Technologies Co., Ltd., Longgang District, Shenzhen, Guangdong 518129 (CN)
(72) Inventor: MENG, Xian, Shenzhen, Guangdong 518129 (CN); LIN, Meixin, Shenzhen, Guangdong 518129 (CN); QIAO, Yunfei, Shenzhen, Guangdong 518129 (CN); WANG, Yu, Shenzhen, Guangdong 518129 (CN)
(74) Representative: Gill Jennings & Every LLP
(86) International application number: PCT/CN2020/117890
(87) International publication number: WO 2021/057924

(56) References cited:
- WO-A1-2018/236960
- CN-A- 102 264 095
- CN-A- 103 428 782
- CN-A- 103 428 782
- CN-A- 104 219 718
- CN-A- 108 024 351
- US-A1- 2017 230 104
- HUAWEI ET AL: "RACH configuration and utilization in NTN", vol. RAN WG2, no. Prague, Czech Republic; 20190826 - 20190830, 16 August 2019 (2019-08-16), XP051768995, Retrieved from the Internet <URL:http://www.3gpp.org/ftp/tsg_ran/WG2_RL2/TSGR2_107/Docs/R2-1911235.zip> [retrieved on 20190816]
- NOKIA ET AL: "NTN Requirements for UE Location", vol. RAN WG1, no. Reno, USA; 20190513 - 20190517, 13 May 2019 (2019-05-13), XP051727546, Retrieved from the Internet <URL:http://www.3gpp.org/ftp/Meetings%5F3GPP%5FSYNC/RAN1/Docs/R1%2D1906089%2Ezip> [retrieved on 20190513]
- CATT: "Mobility Issue for LEO in NTN System", 3GPP DRAFT; R2-1908752, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Prague, Czech Republic; 20190826 - 20190830, 16 August 2019 (2019-08-16), Mobile Competence Centre ; 650, route des Lucioles ; F-06921 Sophia-Antipolis Cedex ; France, XP051766574

## Description

### TECHNICAL FIELD

This application relates to the field of wireless communication technologies, and in particular, to a cell handover method and apparatus.

### BACKGROUND

In a satellite communication system, a satellite usually runs along an orbit and moves relative to the ground. As a result, a coverage area of the satellite changes, a coverage area of a cell of the satellite may also change, and cell handover occurs on a terminal. Conditional handover is a handover method proposed to improve reliability when the terminal performs cell handover. In the conditional handover method, an access resource of a new cell is first reserved, and a relatively high threshold for handover triggering is provided in a handover command. Once handover is performed, the terminal can be directly handed over to a target cell. Because a plurality of trigger conditions and a plurality of candidate cells are introduced, the plurality of candidate cells may simultaneously meet the trigger conditions for conditional handover.

To select a most suitable target cell for handover/access when the plurality of cells simultaneously meet the trigger conditions for conditional handover, the terminal calculates, based on ephemeris information and location information of the terminal, duration in which each candidate cell can provide a service for the terminal, and selects a cell that can provide a service for the terminal for the longest time as the target cell. However, an actual situation of a cell may change. For example, a payload of a satellite base station of the cell, a payload of the cell, a location of the cell, and a beam angle and a spectrum resource of the cell may change. As a result, a situation of the cell when the trigger condition is generated is different from that when handover actually occurs. Consequently, the target cell determined by the terminal is not a most suitable access cell.

US2017230104A1 relates to handoff for satellite communication.

HUAWEI ET AL, "RACH configuration and utilization in NTN", vol. RAN WG2, no. Prague, Czech Republic; 20190826 - 20190830, (20190816), 3GPP DRAFT; R2-1911235 RACH CONFIGURATION AND UTILIZATION IN NTN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, relates to RACH configuration and utilization in NTN.

NOKIA ET AL, "NTN Requirements for UE Location", vol. RAN WG1, no. Reno, USA; 20190513 - 20190517, (20190513), 3GPP DRAFT; R1-1906089, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, relates to NTN Requirements for UE location.

### SUMMARY

Implementations of this application provide a cell handover method and apparatus, to determine a suitable access cell for a terminal in a cell handover process.

The invention has been defined in the independent claims. Further specific technical features have been defined in the dependent claims.

### BRIEF DESCRIPTION OF DRAWINGS

FIG. 1 is a schematic diagram of cell handover;
FIG. 2 is a signaling flowchart of conditional handover;
FIG. 3 is a schematic architectural diagram of a satellite communication system;
FIG. 4 is a schematic architectural diagram of another satellite communication system;
FIG. 5 is a schematic diagram of a non-contention-based random access process;
FIG. 6 is a flowchart of cell handover according to an implementation of this application;
FIG. 7 is a flowchart of cell handover according to an implementation of this application;
FIG. 8 is a flowchart of cell handover according to an implementation of this application;
FIG. 9 is a flowchart of cell handover according to an implementation of this application;
FIG. 10 is a cell handover apparatus according to an implementation of this application;
FIG. 11 is a cell handover apparatus according to an implementation of this application;
FIG. 12 is a cell handover apparatus according to an implementation of this application; and
FIG. 13 is a cell handover apparatus according to an implementation of this application.

### DESCRIPTION OF IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation that does not fall within the scope of the claims does not form part of the invention, but rather included as an illustrative example that is useful for understanding the invention.

All aspects, implementations, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of the solutions may further be used.

In addition, the term "for example" in the implementations of this application is used to represent giving an example, an illustration, or a description. Any implementation or design described as an "example" in this application should not be explained as being more preferred or having more advantages than another implementation or design. Exactly, the term "example" is used to present a concept in a specific manner.

A network architecture and a service scenario described in the implementations of this application are intended to describe the technical solutions in the implementations of this application more clearly, but constitute no limitation on the technical solutions provided in the implementations of this application. Persons of ordinary skill in the art may learn that the technical solutions provided in the implementations of this application are also applicable to a similar technical problem as the network architecture evolves and a new service scenario emerges.

The following describes some terms in the implementations of this application, to facilitate understanding of persons skilled in the art.
(1) A terminal is also referred to as user equipment (user equipment, UE), a mobile station (mobile station, MS), a mobile terminal (mobile terminal, MT), or the like, and is a device that provides voice and/or data connectivity for a user. For example, the terminal device includes a handheld device, a vehicle-mount device, an Internet of Things device, or the like that has a satellite communication function. Currently, the terminal device may be a mobile phone (mobile phone), a tablet, a notebook computer, a palmtop computer, a mobile Internet device (mobile Internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a terminal device in a 5G network, a terminal device in a future evolved public land mobile communication network (Public Land Mobile Network, PLMN) or another future communication system, or the like.
(2) A network device is located in a communication system integrated with a satellite communication system, can provide a connection service for a satellite, and can connect the satellite to a core network. For example, the network device may be a network device that has a satellite gateway function in a communication system, for example, a gateway (gateway) device, a ground station device, or a non-terrestrial network gateway (Non-terrestrial network Gateway, NTN-Gateway)/satellite gateway.
(3) The satellite, also referred to as a satellite base station, is located in the satellite communication system and can provide a radio access service for a terminal that is in coverage corresponding to the satellite. When the satellite is a communication satellite in the satellite communication system, the satellite may be a geostationary earth orbit (geostationary earth orbit, GEO) satellite, a non-GEO satellite, a low-earth orbit (low-earth orbit, LEO) satellite, or the like. Alternatively, satellites may be divided based on functionality, for example, include a transparent payload satellite (transparent payload satellite), a regenerative payload satellite (regenerative payload satellite), and the like.

The transparent payload satellite, also known as a "transparent transponder" or a "bent-pipe transponder", includes a receiver circuit, a frequency conversion circuit, a modulation circuit, an amplification circuit, a transmitter circuit, and the like. An uplink signal is received from the ground on a frequency band, and a downlink signal is transmitted to the ground on another frequency band after frequency conversion, modulation, and amplification are performed on the uplink signal. This implements long-distance communication and broadcasting on the earth, and may also be used for inter-satellite communication.

The regenerative payload satellite not only has functions of wireless spectrum filtering, frequency conversion, and amplification, but also has functions of modulation and demodulation, and even switching routes. The regenerative payload satellite is equivalent to having all or some of base station functions.
(4) A beam is a shape formed by electromagnetic waves emitted by satellite antennas on the surface of the earth, and is like a specific range of beams of a flashlight. Alternatively, a signal emitted by the satellite is not 360 degrees of radiation, but is a signal wave emitted in a specific direction in a concentrated manner.
(5) Coverage of a cell (cell) is all or a part of coverage of a base station/satellite base station. Usually, coverage of one or more beams is understood as coverage of a cell.
(6) In ephemeris information, an ephemeris in GPS measurement is a table of a precise location or a trajectory that is of a moving celestial body and that changes with time, and the ephemeris is a function of time. A satellite ephemeris may determine a running status such as time, a location, or a speed of a flight body.
(7) Cell handover (Cell handover) is channel switch (Channel Switch) that needs to be performed in a wireless communication system when a mobile station (such as the terminal) moves from one cell to another cell, to keep communication of a mobile user uninterrupted.
(8) A random access process refers to a process that starts from a step of sending, by the terminal, a random access preamble to attempt to access a network and that ends before a basic signaling connection is established between the terminal and the network. The process includes contention-based random access and non-contention-based random access.

The term "and/or" in this application describes an association relationship for describing associated objects and represents that three relationships may exist. For example, A and/or B may represent the following three cases: Only A exists, both A and B exist, and only B exists. The character "/" usually indicates an "or" relationship between the associated objects.

"A plurality of" in this application means two or more.

In addition, it should be understood that in descriptions of this application, terms such as "first" and "second" are merely intended for purposes of description, and should not be understood as an indication or implication of relative importance, and cannot be understood as an indication or implication of a sequence.

Technical solutions in the implementations of this application may be applied to a satellite communication system, where the satellite communication system may be integrated with a conventional mobile communication system. For example, the mobile communication system may be a 4th generation (4th Generation, 4G) communication system (for example, a long term evolution (long term evolution, LTE) system), a worldwide interoperability for microwave access (worldwide interoperability for microwave access, WiMAX) communication system, a 5th generation (5th Generation, 5G) communication system (for example, a new radio (new radio, NR) system), and a future mobile communication system.

For ease of understanding the implementations of this application, the following describes an application scenario of this application. The service scenario described in the implementations of this application is intended to describe the technical solutions in the implementations of this application more clearly, but constitutes no limitation on the technical solutions provided in the implementations of this application. Persons of ordinary skill in the art may learn that the technical solutions provided in the implementations of this application are also applicable to a similar technical problem as a new service scenario emerges.

In a cellular system, a mechanism in which a terminal performs cell handover is mainly implemented based on measurement information such as signal strength and quality. Because the terminal randomly moves in a cellular cell, distances between terminals and a base station are different, a terminal farther away from the base station has weaker signal strength and worse signal quality, and a terminal closer to the base station has stronger signal strength and better signal quality. In this case, a phenomenon of communication interruption occurs on a terminal having weak signal strength and poor signal quality, that is, a terminal farther away from the base station. This phenomenon is referred to as a near-far effect.

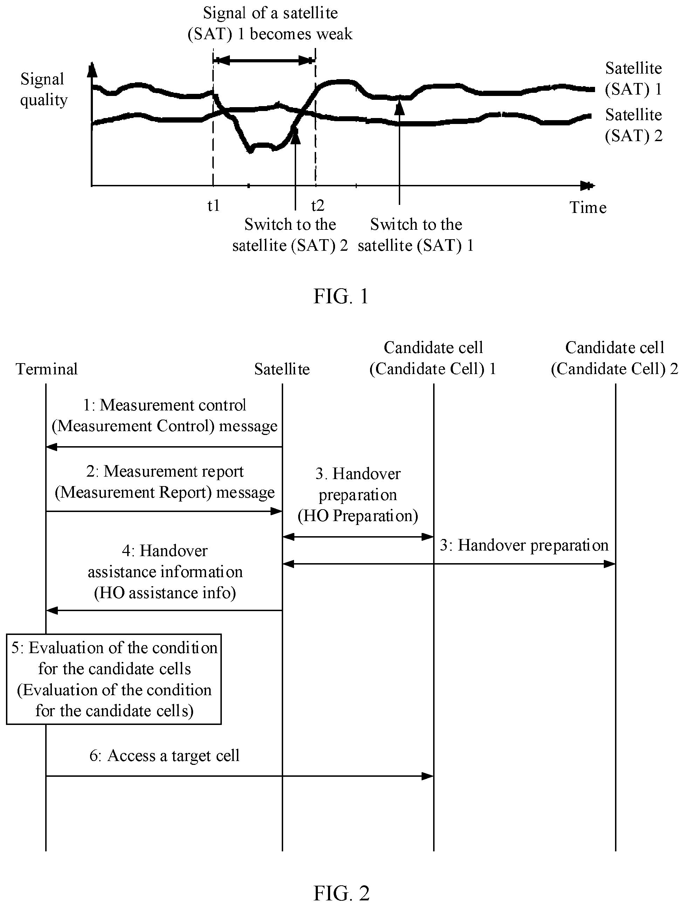

However, in the satellite communication system, because signal strength and signal quality of a beam center point are little different from those of a beam edge point, if the measurement information is used as a decision condition for cell handover, that is, signal strength and quality are used as a decision condition for a cell, a ping-pong effect of the terminal occurs. Signal quality of a satellite SAT 1 and a satellite SAT 2 is shown in FIG. 1. Because some events occur, the signal quality, of the SAT 1, detected by the terminal is excessively poor (for example, lower than a set quality threshold) at time t1, and consequently, the terminal switches from the SAT 1 to the SAT 2. After the events disappear, and after the terminal detects that the signal quality of the SAT 1 is improved, the terminal switches from the SAT 2 back to the SAT 1. However, during the occurrence of the events, the signal quality of the SAT 1 does not deteriorate, but ping-pong switching is caused by a shadow effect, such as blocking, generated due to impact of the events. This reduces reliability of satellite switching/cell handover.

To improve handover reliability, a handover manner of conditional handover is proposed. A signaling procedure of conditional handover is shown in FIG. 2, and includes the following steps.

Step 1: A satellite sends a measurement control (Measurement Control) message to a terminal.

A cell that the terminal currently accesses may be considered as a source cell (Source cell) in a handover process, and the source cell is a cell covered by the satellite.

The measurement control message includes a first threshold, and the first threshold is used as a trigger threshold for cell handover, to ensure sending of a measurement report.

Step 2: The terminal sends a measurement report (Measurement Report) message to the satellite.

Step 3: The satellite performs handover preparation (HO preparation) with a candidate cell (Candidate Cell) 1 and a candidate cell 2.

The candidate cell 1 may be located in coverage of the satellite, or the candidate cell 1 may be not located in the coverage of the satellite. The candidate cell 2 may be located in the coverage of the satellite, or the candidate cell 2 may be not located in the coverage of the satellite.

In this step, the satellite may determine a second threshold of a candidate cell.

Step 4: The satellite sends handover assistance information (HO assistance info) to the terminal.

The HO assistance info includes the second threshold of the candidate cell, and the second threshold is used as a trigger threshold for conditional handover. For example, the second threshold may include a reference signal received power (Reference Signal Received Power, RSRP) threshold of the candidate cell 1 and an RSRP threshold of the candidate cell 2.

Step 5: The terminal performs evaluation of the condition for the candidate cells (Evaluation of the condition for the candidate cells), and selects a target cell from the candidate cells.

As shown in FIG. 2, the target cell selected by the terminal is the candidate cell 1.

Step 6: The terminal accesses the target cell.

As shown in FIG. 2, the terminal accesses the candidate cell 1.

To briefly sum up, in a conditional handover process, a relatively low trigger threshold is first configured as the trigger threshold for cell handover to ensure reporting of the measurement report, and then a relatively high trigger threshold is configured as the trigger condition for conditional handover to ensure reliable transmission. In this way, the foregoing ping-pong effect is mitigated or avoided. In addition, an access resource of a new cell is reserved in the conditional handover process. Once the terminal meets the trigger condition (for example, the second threshold in FIG. 2) for conditional handover, the terminal can be directly handed over to the target cell. Usually, the handover of the terminal to the target cell includes synchronization to the target cell and random access to the target cell.

The trigger condition for conditional handover is introduced in a satellite communication system. The trigger condition for conditional handover not only includes measurement information of a signal (signal strength and quality), but also includes triggering of locations (including a location of the terminal and a location of the satellite) and triggering of time (for example, a timer). Because a plurality of trigger conditions are introduced and there may be a plurality of candidate cells, the plurality of candidate cells may simultaneously meet the trigger conditions for conditional handover. In this case, the terminal needs to select, from the plurality of candidate cells meeting the trigger conditions for conditional handover, a most suitable cell as the target cell for handover or access.

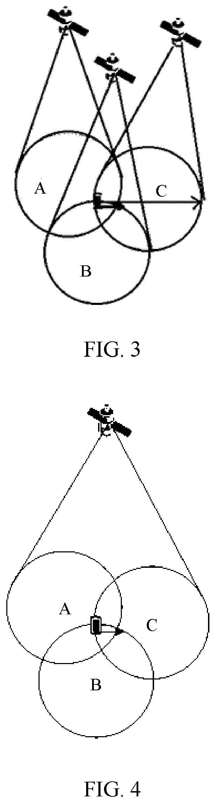

In one manner, the terminal calculates serviceable duration of these candidate cells based on ephemeris information of the satellite and location information of the terminal, and usually selects a cell with longest serviceable duration as the target cell. FIG. 3 is used as an example for description. Satellites of three cells move along an orbit from right to left (for example, left and right shown in FIG. 3), and a terminal currently accesses the cell A. A trigger condition, for conditional handover, sent by the satellite to the terminal includes a trigger condition, for conditional handover, of the cell B and a trigger condition, for conditional handover, of the cell C. It is assumed that both the cell B and the cell C meet the trigger conditions for conditional handover at a moment. The terminal determines, based on pre-obtained ephemeris information of the satellite and location information of the terminal, that service duration of the cell C is longer than service duration of the cell B. Therefore, the terminal selects the cell C as a target cell for access.

However, when the terminal determines, based on the ephemeris information and a terminal location, to access which cell, there is a relatively large time difference between time at which a handover condition is generated and time at which handover actually occurs. Therefore, when handover actually occurs, factors for generating the handover condition may change, for example, a payload of a base station, a payload of the cell, and a beam angle and a spectrum resource of the cell. As a result, when handover actually occurs, a cell selected by the terminal is not a most suitable cell, or is not a cell that can provide longest service duration for the terminal. In addition, the ephemeris information can only help the terminal select a suitable satellite, but cannot help the terminal select a more suitable cell of the satellite. Therefore, the satellite further needs to inform the terminal of a location relationship of each cell of the satellite. A quantity of beams of a single satellite is large. For example, in an extreme case, a single satellite in the VLEO constellation may have thousands of beams. In addition, coverage of a moving cell of the satellite is frequently adjusted, and interaction between the satellite and the terminal usually takes long time. Therefore, if the satellite informs the terminal of the location relationship of each cell of the satellite, the satellite may not notify the terminal of a real-time location of the cell in a timely manner. As a result, the cell selected by the terminal is not the most suitable cell, and high signaling overheads are also generated. To sum up, the cell selected by the terminal based on the ephemeris information and the terminal location is not the most suitable cell.

In view of this, to ensure that the terminal can access a suitable cell in a cell handover process, this application provides a cell handover method to determine a suitable access cell for the terminal in the cell handover process.

In the method, in a process in which the terminal performs cell handover, the terminal sends a random access preamble of a determined first cell to a satellite. The satellite determines terminal information based on the random access preamble, where the terminal information is used for cell handover of the terminal, determines, based on the terminal information and cell attribute information, a second cell most suitable for the terminal to access, and sends access information of the second cell to the terminal. The terminal accesses the second cell. According to the method, the satellite determines the suitable access cell for the terminal, and the satellite comprehensively determines the suitable access cell based on the terminal information and the cell attribute information. Because the cell attribute information is considered, compared with the first cell determined by the terminal, the second cell determined by the satellite is more suitable for the terminal to access. In this way, it can be ensured that the terminal can access a most suitable cell, the satellite determines the most suitable access cell, and the satellite does not need to send a large amount of cell attribute information to the terminal, thereby reducing signaling overheads.

The most suitable access cell mentioned in this implementation of this application may be a cell that can provide longest service duration for the terminal, or may be a most suitable cell meeting another condition. It may be understood that in this implementation of this application, the descriptions are provided only by using the cell that can provide the longest service duration for the terminal as an example. For a case of selecting the most suitable cell meeting another condition, the cell handover method provided in this implementation of this application may be used.

This implementation of this application provides a cell handover method. The method may be applied to a satellite communication system. Specifically, the method may be applied to the satellite communication system shown in FIG. 3, where a cell in which a terminal is located before the terminal is handed over and a cell to which the terminal is handed over in FIG. 3 belong to different satellites. The method may also be applied to the satellite communication system shown in FIG. 4, where a cell in which a terminal is located before the terminal is handed over and a cell to which the terminal is handed over in FIG. 4 belong to a same satellite. In this implementation of this application, a satellite in the satellite communication system implements a complete base station function, and simultaneously covers one or more cells on the ground.

Before a specific process of the cell handover method in this implementation of this application is described, a non-contention-based random access process is briefly described first.

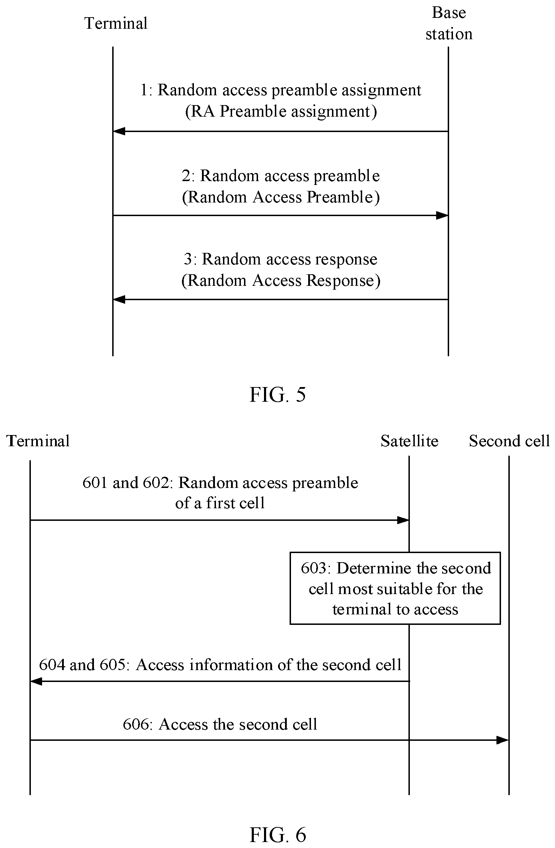

Non-contention-based random access is random access initiated by the terminal on a specified physical random access channel (Physical Random Access Channel, PRACH) channel resource based on an indication of a base station by using a specified random access preamble (Preamble), and is applicable to scenarios such as handover, downlink data arrival but out-of-synchronization, and localization. FIG. 5 shows a specific process of non-contention-based random access, and steps are as follows.

Step 1: A base station sends RA preamble assignment (RA Preamble assignment) to a terminal.

Specifically, the base station sends, to the terminal, the random access preamble assignment via dedicated signaling in downlink (Random Access Preamble assignment via dedicated signaling in DL, RA Preamble assignment).

The base station sends, to the terminal, the preamble and the PRACH channel access resource that are required in the non-contention-based random access process. If a preamble resource is insufficient in this case, the base station can only notify the terminal to initiate contention-based random access, and a manner of this is to set all preamble indexes (indexes) in a physical downlink control channel (Physical Downlink Control Channel, PDCCH) format 1a to 0s. After the preamble indexes decoded by the terminal are all 0s, the terminal performs a contention-based random access process.

For handover, a non-contention-based preamble is sent to the terminal through a handover command. In other two scenarios, DCI 1A scrambled by using a radio network temporary identifier (Radio Network Temporary Identifier, RNTI) needs to be sent to the terminal.

Step 2: The terminal sends a preamble (random access preamble on a PRACH in uplink,) to the base station.

If a plurality of PRACH channel resources are specified, the terminal randomly selects, from three consecutive and available subframes that have PRACH channel resources, a specified PRACH channel resource to carry MSG1. A subsequent processing process on a side of the base station is the same as the contention-based random access process.

Step 3: The base station feeds back a random access response (Random Access Response) (for example, Random Access Response on a DL-SCH) to the terminal.

A subsequent processing process on the side of the base station is the same as the contention-based random access process.

The following describes in detail a specific process of the cell handover method with reference to FIG. 6. The process includes the following steps.

Step 601: A terminal sends a random access preamble of a determined first cell to a satellite.

The random access preamble is used to determine terminal information, and the terminal information is used for cell handover of the terminal, for example, the terminal information may be used to help the satellite select a most suitable access cell for the terminal. The terminal information includes at least one of the following content: location information of the terminal, an identifier of a cell meeting a trigger condition for conditional handover, and the trigger condition that the cell meeting the trigger condition for conditional handover meets. If there are a plurality of cells meeting a trigger condition for conditional handover, the trigger condition that the cell meeting the trigger condition for conditional handover meets is the trigger condition that the plurality of cells meeting the trigger condition for conditional handover meet.

Specifically, the terminal determines one or more candidate cells meeting the trigger condition for conditional handover, determines the first cell in the candidate cells, and sends the random access preamble of the first cell to the satellite. If there is one candidate cell, the terminal determines the candidate cell as the first cell; if there are a plurality of candidate cells, the terminal selects the first cell from the plurality of candidate cells.

Optionally, before step 601, the base station may send one or more trigger conditions for conditional handover and the random access preamble to the terminal, where the one or more trigger conditions for conditional handover are trigger conditions, for conditional handover, of one or more cells, and the random access preamble may be a random access preamble of one or more cells.

Step 602: The satellite receives the random access preamble that is of the first cell and that is sent by the terminal. The satellite may determine the terminal information based on the received random access preamble.

In an implementation, the satellite stores a correspondence between a random access preamble and terminal information, and the satellite can query the correspondence based on the received random access preamble, to determine terminal information corresponding to the random access preamble.

In another implementation, the satellite stores a first correspondence between a random access preamble and a terminal identifier, and the satellite can query the first correspondence based on the received random access preamble, to determine a terminal identifier corresponding to the random access preamble. The satellite further prestores a second correspondence between a terminal identifier and terminal information, and then the satellite queries the second correspondence based on the determined terminal identifier, to determine corresponding terminal information.

In still another implementation, the satellite stores a correspondence between a random access preamble and a terminal identifier, and the satellite can query the correspondence based on the received random access preamble, to determine a terminal identifier corresponding to the random access preamble. The satellite then indicates a terminal corresponding to the terminal identifier to report the terminal information.

The terminal information is used for cell handover of the terminal, for example, used to help the base station select a most suitable access cell for the terminal. The terminal information may include, but is not limited to, at least one of the following content: the location information of the terminal, the identifier of the cell meeting the trigger condition for conditional handover, and the trigger condition that each cell meeting the trigger condition for conditional handover meets.

Step 603: The satellite determines, based on the terminal information determined by using the random access preamble and current cell attribute information, a second cell most suitable for the terminal to access. The cell attribute information includes a cell payload status and/or cell coverage.

The satellite stores the cell attribute information. Optionally, the cell attribute information may include cell attribute information corresponding to each cell covered by the satellite, or may include cell attribute information corresponding to each cell covered by another satellite other than the satellite. In other words, the second cell determined by the satellite may be a cell in coverage of the satellite, or may be a cell in coverage of another satellite.

The first cell and the second cell belong to a same satellite, or the first cell and the second cell belong to different satellites, that is, the first cell and the second cell are in coverage of a same satellite, or the first cell and the second cell are in coverage of different satellites. If the first cell and the second cell belong to the same satellite, the first cell and the second cell may be the same cell, or the first cell and the second cell may be different cells. If the first cell and the second cell belong to different satellites, the first cell and the second cell are different cells.

Optionally, before step 603, the satellite may determine, in one or more of the following manners, whether to select a most suitable access cell for the terminal.
1. If the satellite receives a first message sent by the terminal, the satellite determines to select a most suitable access cell for the terminal. This may be specifically implemented as follows: The satellite receives a first message sent by the terminal, where the first message is used to indicate to enable the satellite to select an access cell for the terminal, or the first message includes first indication information and the first indication information is used to indicate to enable the satellite to select the access cell for the terminal.

The first message may be signaling sent by the terminal to the satellite or a field in the signaling, or the first message may be signaling sent by the terminal to a network and forwarded by the network to the satellite or a field in the signaling. This is not limited herein.
2. If the satellite and the terminal agree in advance that the satellite selects an access cell for the terminal, the satellite determines to select a most suitable access cell for the terminal.
3. If the satellite determines that cell handover performed by the terminal is triggered by conditional handover, the satellite determines to select a most suitable access cell for the terminal.

Because the satellite may not know the terminal information (for example, may not know the location information of the terminal, that is, may not know that the terminal is in coverage of which cells), or the terminal information stored in the satellite is out of date, before step 603, the satellite may send a second message to the terminal, where the second message is used to indicate the terminal to report the terminal information, or the second message includes second indication information and the second indication information is used to indicate the terminal to report the terminal information. The terminal information may include at least one of the following content: the location information of the terminal, the identifier of the cell meeting the trigger condition for conditional handover, the trigger condition that each cell meeting the trigger condition for conditional handover meets, and the like. The second message may be a random access response message or other RRC signaling. This is not limited herein. Optionally, the second message may further include access information of the first cell.

Step 604: The satellite sends access information of the second cell to the terminal. Optionally, after determining that the first cell and the second cell are different cells, the satellite may send the access information of the second cell to the terminal.

The access information of the second cell may include at least one of the following content: a timing advance (timing advance, TA) of the second cell, a UL grant (uplink scheduling grant) of the second cell, a temporary cell radio network temporary identifier (temporary C-RNTI, TC-RNTI) of the second cell, and a third message used for downlink synchronization of the second cell. For example, the access information of the second cell includes the TA of the second cell, the UL grant of the second cell, the TC-RNTI of the second cell, and the third message used for downlink synchronization of the second cell.

Specifically, the UL grant may include at least one of the following information: identification information indicating whether frequency hopping is enabled in the second cell, indication information of an uplink physical uplink shared channel (Physical Uplink Shared Channel, PUSCH) frequency resource, indication information of an uplink PUSCH time resource, a modulation and coding scheme (Modulation and Coding Scheme, MCS), a PUSCH power control command, and a channel state information (Channel State Information, CSI) request, where the PUSCH power control command may include a PUSCH transmit power control (Transmit power control, TPC) command.

The third message may include at least one of the following information: a frequency, a subcarrier spacing, and a guard interval of the second cell, a time domain location that is of a primary synchronization signal (Primary Synchronization Signal, PSS)/secondary synchronization signal (Secondary Synchronization Signal, SSS) of the second cell and that is relative to the first cell, reserved time, and the indication information of the uplink PUSCH time resource of the UL grant.

In an example, the satellite may determine the TA in the following manners.
1. If the first cell and the second cell belong to the same satellite, the TA of the second cell and a TA of the first cell are related only to a delay difference caused by a radio frequency. For example, the satellite may determine the TA of the second cell based on a sum of the TA of the first cell and the delay difference caused by the radio frequency.
2. The TA of the second cell may be related to a distance regardless of whether the first cell and the second cell belong to the same satellite. For example, the satellite may pre-estimate a delay difference caused by a radio frequency or the distance.

In an example, if the first cell and the second cell belong to the same satellite, the first cell and the second cell may be scheduled together or obtain the UL grant during scheduling, so that the satellite allocates a time-frequency resource of the second cell to the terminal.

UL grant information is specifically shown in the following table.

| UL grant field (UL grant field) | Number of bits (number of bits) |
|---|---|
| Frequency hopping flag (Frequency hopping flag) | 1 |
| PUSCH frequency resource allocation (indication information of a PUSCH frequency resource) | 14 |
| PUSCH time resource allocation (indication information of a PUSCH time resource) | 4 |
| MCS | 4 |
| TPC command for a PUSCH (TPC command for a PUSCH) | 3 |
| CSI request (CSI request) | 1 |

The TC-RNTI is allocated by the base station to the terminal.

The third message may be understood as a newly added downlink synchronization assistance message. Because previously, the terminal performs downlink synchronization only on the first cell, but now the terminal needs to access a most suitable cell (namely, the second cell) determined by the satellite, the downlink synchronization assistance information may be added, so that the terminal quickly performs downlink synchronization on the most suitable cell. For example, the downlink synchronization assistance information includes a frequency, a subcarrier spacing, and a guard interval of the most suitable cell, and the time domain location that is of the PSS/SSS of the second cell and that is relative to the first cell. In addition, because the downlink synchronization on the second cell requires specific time, the reserved time may be indicated in the information, or indicated in an uplink PUSCH time resource indication of the UL grant, to ensure that the terminal can send an uplink message at specified time.

Step 605: The terminal receives the access information that is of the second cell and that is sent by the satellite.

Optionally, corresponding to a side of the satellite, before step 605, the terminal may send a first message to the satellite, where the first message is used to indicate to enable the satellite to select an access cell for the terminal, or the first message includes first indication information and the first indication information is used to indicate to enable the satellite to select the access cell for the terminal.

Optionally, corresponding to the side of the satellite, before step 605, the terminal may receive a second message sent by the satellite, where the second message is used to indicate the terminal to report the terminal information, or the second message includes second indication information and the second indication information is used to indicate the terminal to report the terminal information. If determining to report the terminal information, the terminal sends the terminal information to the satellite.

In an implementation, the terminal may determine whether to access the first cell or report the terminal information. For example, if there is only one trigger condition of the terminal, or there is only one triggered target cell for handover, the terminal may determine to directly access the first cell; otherwise, the terminal may determine to report the terminal information.

Optionally, the satellite may send a cell number of the second cell to the terminal.

In an example, the access information of the second cell may be sent to the terminal by using a random access response message, and the random access response message further includes the cell number of the second cell.

Step 606: The terminal accesses the second cell by using the access information of the second cell.

Specifically, the terminal performs downlink synchronization on the second cell by using the third message, and sends uplink information on the uplink PUSCH frequency resource and/or time resource indicated by the UL grant.

According to the solution provided in this implementation of this application, in a satellite communication system, a cell that the terminal finally accesses is determined by the satellite for a second time, instead of being determined by the terminal, and the satellite comprehensively determines, based on the terminal information and the cell attribute information, the cell that the terminal finally accesses. Because the cell attribute information is considered, compared with the first cell determined by the terminal, the second cell determined by the satellite is more suitable for the terminal to access. In this way, it can be ensured that the terminal can access a most suitable cell, the satellite determines the most suitable access cell, and the satellite does not need to send a large amount of cell attribute information to the terminal, thereby reducing signaling overheads.

Based on FIG. 6, a specific cell handover process is described in detail in this implementation of this application.

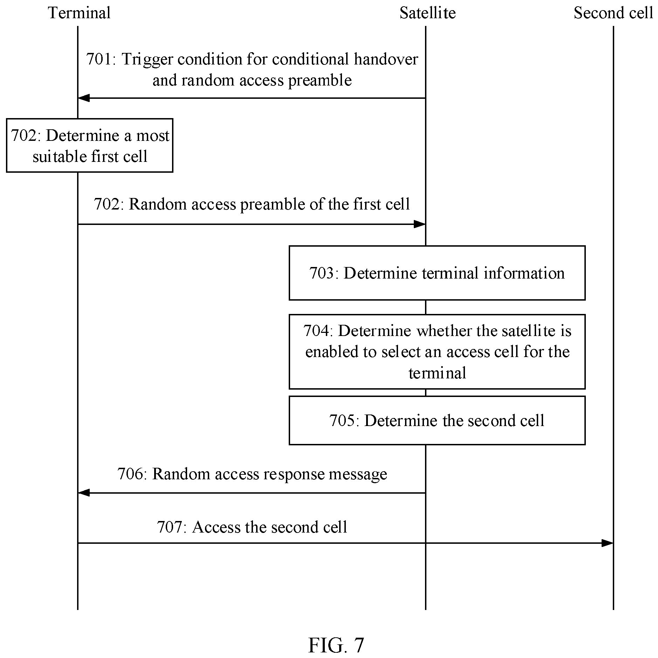

Refer to FIG. 7. A case in which a satellite directly calculates a most suitable access cell for a terminal includes the following steps.

Step 701: The satellite sends one or more trigger conditions for conditional handover and a random access preamble to the terminal.

Step 702: When determining that the trigger condition for conditional handover is met, the terminal determines a most suitable first cell, and sends a random access preamble of the first cell to the satellite.

In an example, if a trigger condition for conditional handover is met, there is a candidate cell, and the candidate cell is determined as the most suitable first cell.

In another example, if a plurality of trigger conditions for conditional handover are met, there are a plurality of candidate cells, and the most suitable first cell is selected from the plurality of candidate cells.

Step 703: The satellite receives the random access preamble of the first cell, and determines terminal information for cell handover and the first cell.

Step 704: The satellite determines whether the satellite is enabled to select an access cell for the terminal. If the satellite is enabled to select an access cell for the terminal, step 705 is performed.

Step 705: The satellite determines, based on the terminal information and cell attribute information, a second cell most suitable for the terminal to access.

The satellite knows information about all cells (beams) transmitted by the satellite, for example, a payload status and cell coverage, and the satellite may determine, based on location information of the terminal, which cells can be accessed by the terminal (in coverage) and time in which the cells can provide services after the access. The satellite comprehensively determines the most suitable cell based on the information.

Step 706: The satellite calculates access information of the second cell, and the satellite includes the cell number of the second cell and the access information of the second cell in a random access response message and sends the random access response message to the terminal.

The access information of the second cell includes a TA, a UL grant, a TC-RNTI, and a third message used for downlink synchronization.

Step 707: The terminal receives the random access response message, performs downlink synchronization on the second cell, and sends an uplink message.

Specifically, the terminal performs downlink synchronization by using the third message, and sends the uplink message at a resource location indicated by the UL grant.

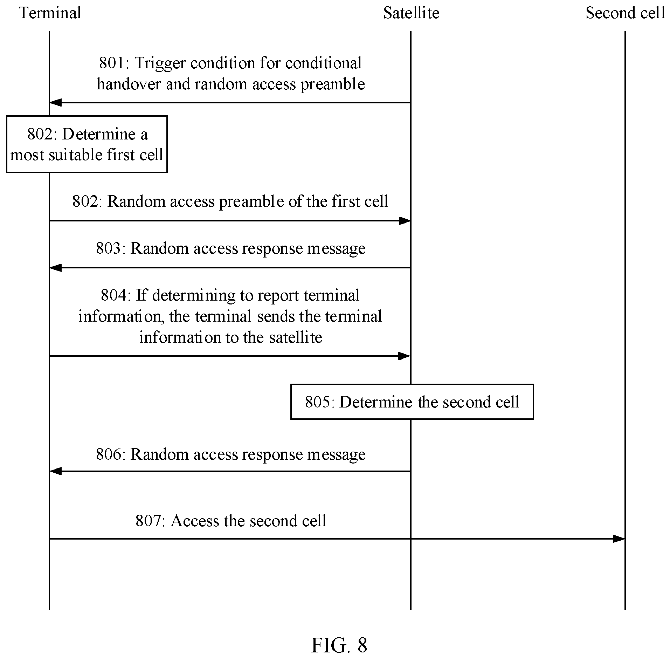

The satellite does not know the terminal information, for example, the location information of the terminal, or the terminal information stored in the satellite is out of date. Therefore, the satellite cannot accurately determine which cells can be accessed by the terminal (that is, which cells meet an access criterion or which cells meet the trigger condition for conditional handover). In this way, the satellite needs to enable the terminal to report the terminal information. As shown in FIG. 8, the following steps are included.

Step 801: A satellite sends one or more trigger conditions for conditional handover and a random access preamble to a terminal.

Step 802: When determining that the trigger condition for conditional handover is met, the terminal determines a most suitable first cell, and sends a random access preamble of the first cell to the satellite.

Step 803: The satellite receives the random access preamble of the first cell, and the satellite sends a random access response message to the terminal, where the random access response message includes access information of the first cell and indication information used to indicate the terminal to report terminal information.

After receiving the random access preamble of the terminal, the base station finds that the terminal belongs to conditional handover triggering. However, due to lack of information, the base station cannot select an optimal handover cell for the terminal. Therefore, in addition to including access information of an initial access cell in the random access response message, the base station further includes, in the random access response message, a reporting indication indicating the terminal to feed back information about a trigger condition.

Step 804: The terminal receives the random access response message, and may determine to directly access the first cell or determine to report the terminal information. If determining to report the terminal information, the terminal sends the terminal information to the satellite.

For example, if there is only one trigger condition of the terminal, or there is only one triggered target cell for handover, the terminal may determine to directly access the first cell.

The terminal information includes location information of the terminal (if the terminal has a localization capability), an identifier of a cell meeting a trigger condition for conditional handover, and a trigger condition that each cell meets.

The terminal information reported by the terminal may be further understood as assistance information of an optimal handover base station.

Step 805: If the base station receives the terminal information, the base station selects, based on the terminal information and cell attribute information, a second cell most suitable for the terminal to access.

Step 806: The satellite calculates access information of the second cell, and the satellite includes a cell number of the second cell and the access information of the second cell in the random access response message and sends the random access response message to the terminal.

The access information of the second cell includes a TA, a UL grant, a TC-RNTI, and a third message used for downlink synchronization.

Step 807: The terminal receives the random access response message, performs downlink synchronization on the second cell, and sends an uplink message.

Specifically, the terminal performs downlink synchronization by using the third message, and sends the uplink message at a resource location indicated by the UL grant.

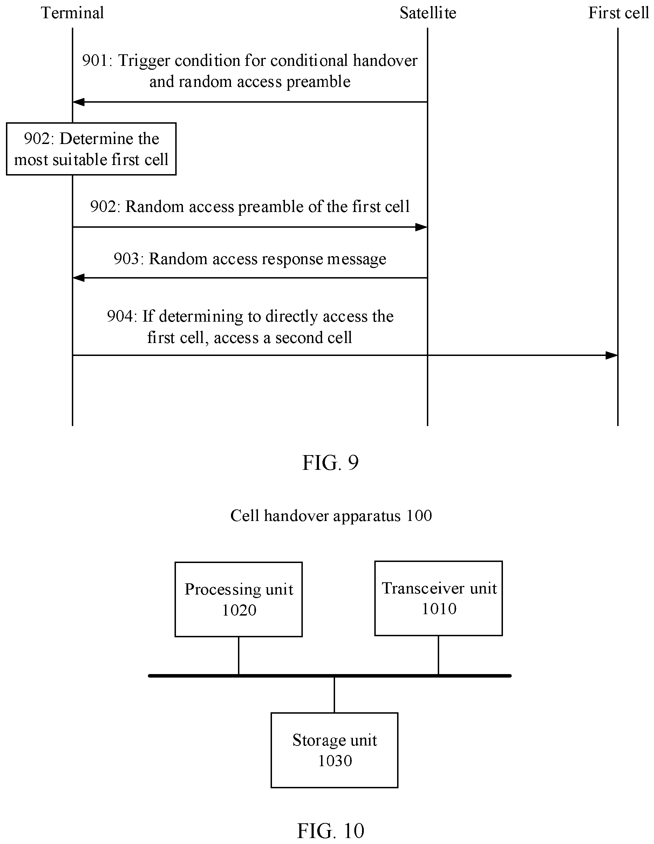

Based on FIG. 8, the terminal may determine to directly access the first cell. Refer to FIG. 9. The following steps are included.

Step 901: A satellite sends one or more trigger conditions for conditional handover and a random access preamble to a terminal.

Step 902: When determining that the trigger condition for conditional handover is met, the terminal determines a most suitable first cell, and sends a random access preamble of the first cell to the satellite.

Step 903: The satellite receives the random access preamble of the first cell, and the satellite sends a random access response message to the terminal, where the random access response message includes access information of the first cell and indication information used to indicate the terminal to report terminal information.

After receiving the random access preamble of the terminal, the base station finds that the terminal belongs to conditional handover triggering. However, due to lack of information, the base station cannot select an optimal handover cell for the terminal. Therefore, in addition to including access information of an initial access cell in the random access response message, the base station further includes, in the random access response message, a reporting indication indicating the terminal to feed back information about a trigger condition.

Step 904: The terminal receives the random access response message, and may determine to directly access the first cell or to report the terminal information. If determining to directly access the first cell, the terminal accesses the first cell based on the access information of the first cell.

Based on a same technical concept as the foregoing cell handover method, as shown in FIG. 10, a cell handover apparatus 100 is provided. The cell handover apparatus 100 can perform the steps performed by the satellite in the methods in FIG. 6 to FIG. 9. To avoid repetition, details are not described herein again. The cell handover apparatus 100 may be a satellite, or may be a chip used in the satellite. The cell handover apparatus 100 includes a transceiver unit 1010, and optionally, further includes a processing unit 1020 and a storage unit 1030. The processing unit 1020 may be separately connected to the storage unit 1030 and the transceiver unit 1010, and the storage unit 1030 may also be connected to the transceiver unit 1010.

The storage unit 1030 is configured to store a computer program.

For example, the transceiver unit 1010 is configured to receive a random access preamble that is of a first cell and that is sent by a terminal, where the random access preamble is used to determine terminal information, and the terminal information is used for cell handover of the terminal.

The processing unit 1020 is configured to determine, based on the terminal information and cell attribute information that is of the satellite, a second cell most suitable for the terminal to access.

The transceiver unit 1010 is further configured to send access information of the second cell to the terminal.

In an implementation, the transceiver unit 1010 is further configured to receive a first message sent by the terminal, where the first message is used to indicate to enable the satellite to select an access cell for the terminal, or the first message includes first indication information and the first indication information is used to indicate to enable the satellite to select the access cell for the terminal.

In an implementation, the transceiver unit 1010 is further configured to send, by the satellite, a second message to the terminal, where the second message is used to indicate the terminal to report the terminal information, or the second message includes second indication information and the second indication information is used to indicate the terminal to report the terminal information.

In an implementation, the access information of the second cell includes at least one of the following content: a TA, a UL grant, a TC-RNTI, and a third message, where the third message is used for downlink synchronization;
the UL grant includes at least one of the following information: identification information indicating whether frequency hopping is enabled in the second cell, indication information of an uplink physical uplink shared channel (PUSCH) frequency resource, indication information of an uplink PUSCH time resource, a modulation and coding scheme (MCS), a PUSCH power control command, and a channel state information (CSI) request; and
the third message includes at least one of the following information: a frequency, a subcarrier spacing, and a guard interval of the second cell, a time domain location that is of a primary synchronization signal (PSS)/secondary synchronization signal (SSS) of the second cell and that is relative to the first cell, reserved time, and the indication information of the uplink PUSCH time resource of the UL grant.

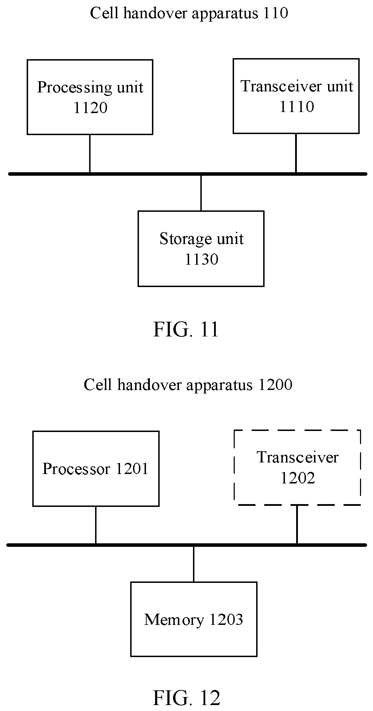

Based on a same technical concept as the foregoing cell handover method, as shown in FIG. 11, a cell handover apparatus 110 is provided. The cell handover apparatus 110 can perform the steps performed by the terminal in the methods in FIG. 6 to FIG. 9. To avoid repetition, details are not described herein again. The cell handover apparatus 110 may be a terminal, or may be a chip used in the terminal. The cell handover apparatus 110 includes a transceiver unit 1110, and optionally, further includes a processing unit 1120 and a storage unit 1130. The processing unit 1120 may be separately connected to the storage unit 1130 and the transceiver unit 1110, and the storage unit 1130 may also be connected to the transceiver unit 1110.

The storage unit 1130 is configured to store a computer program.

For example, the transceiver unit 1110 is configured to: send a random access preamble of a determined first cell to a satellite, where the random access preamble is used to determine terminal information, and the terminal information is used for cell handover of the terminal; and receive access information that is of a second cell and that is sent by the satellite.

The processing unit 1120 is configured to enable the terminal to access the second cell by using the access information of the second cell.

In an implementation, the transceiver unit 1110 is further configured to send a first message to the satellite, where the first message is used to indicate to enable the satellite to select an access cell for the terminal, or the first message includes first indication information and the first indication information is used to indicate to enable the satellite to select the access cell for the terminal.

In an implementation, the transceiver unit 1110 is further configured to: receive, by the terminal, a second message sent by the satellite, where the second message is used to indicate the terminal to report the terminal information, or the second message includes second indication information and the second indication information is used to indicate the terminal to report the terminal information. If determining to report the terminal information, the terminal sends the terminal information to the satellite.

In an implementation, the access information of the second cell includes at least one of the following content: a TA, a UL grant, a TC-RNTI, and a third message, where the third message is used for downlink synchronization;
the UL grant includes at least one of the following information: identification information indicating whether frequency hopping is enabled in the second cell, indication information of an uplink physical uplink shared channel (PUSCH) frequency resource, indication information of an uplink PUSCH time resource, a modulation and coding scheme (MCS), a PUSCH power control command, and a channel state information (CSI) request; and
the third message includes at least one of the following information: a frequency, a subcarrier spacing, and a guard interval of the second cell, a time domain location that is of a primary synchronization signal (PSS)/secondary synchronization signal (SSS) of the second cell and that is relative to the first cell, reserved time, and the indication information of the uplink PUSCH time resource of the UL grant.

In an implementation, the processing unit 1120 is specifically configured to: perform downlink synchronization on the second cell by using the third message, and send uplink information on the uplink PUSCH frequency resource and/or time resource indicated by the UL grant.

FIG. 12 is a schematic block diagram of a cell handover apparatus 1200 according to an implementation of this application. It should be understood that, the cell handover apparatus 1200 can perform the steps performed by the satellite in the methods in FIG. 6 to FIG. 9. To avoid repetition, details are not described herein again. The cell handover apparatus 1200 includes a processor 1201 and a memory 1203, where the processor 1201 and the memory 1203 are electrically coupled.

The memory 1203 is configured to store computer program instructions.

The processor 1201 is configured to execute some or all of computer program instructions in the memory, and when the some or all of the computer program instructions are executed, the apparatus implements method performed by the satellite in the foregoing implementations.

Optionally, a transceiver 1202 is further included, and is configured to communicate with another device, for example, receive a random access preamble that is of a first cell and that is sent by a terminal, and send access information of a second cell to the terminal.

It should be understood that the cell handover apparatus 1200 shown in FIG. 12 may be a chip or a circuit, for example, a chip or a circuit that may be disposed in the satellite. Alternatively, the transceiver 1202 may be a communication interface. The transceiver includes a receiver and a transmitter. Further, the cell handover apparatus 1200 may include a bus system.

The processor 1201, the memory 1203, and the transceiver 1202 are connected through the bus system. The processor 1201 is configured to execute the instructions stored in the memory 1203, to control the transceiver to receive a signal and send a signal, to complete the steps performed by the satellite in the cell handover method in this application. The memory 1203 may be integrated into the processor 1201, or may be disposed separated from the processor 1201.

In an implementation, it may be considered that functions of the transceiver 1202 are implemented by using a transceiver circuit or a dedicated transceiver chip. It may be considered that the processor 1201 is implemented by using a dedicated processing chip, a processing circuit, a processor, or a general-purpose chip.

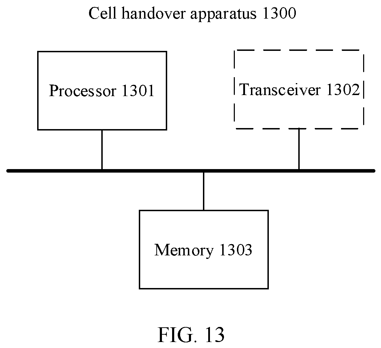

FIG. 13 is a schematic block diagram of a cell handover apparatus 1300 according to an implementation of this application. It should be understood that, the cell handover apparatus 1300 can perform the steps performed by the terminal in the methods in FIG. 6 to FIG. 9. To avoid repetition, details are not described herein again. The cell handover apparatus 1300 includes a processor 1301 and a memory 1303, where the processor 1301 and the memory 1303 are electrically coupled.

The memory 1303 is configured to store computer program instructions.

The processor 1301 is configured to execute some or all of computer program instructions in the memory, and when the some or all of the computer program instructions are executed, the apparatus implements method performed by the terminal in the foregoing implementations.

Optionally, a transceiver 1302 is further included, and is configured to communicate with another device, for example, send a random access preamble of a first cell to a satellite, and receive access information that is of a second cell and that is sent by the satellite.

It should be understood that the cell handover apparatus 1300 shown in FIG. 13 may be a chip or a circuit, for example, a chip or a circuit that may be disposed in the terminal. Alternatively, the transceiver 1302 may be a communication interface. The transceiver includes a receiver and a transmitter. Further, the cell handover apparatus 1300 may include a bus system.

The processor 1301, the memory 1303, and the transceiver 1302 are connected through the bus system. The processor 1301 is configured to execute the instructions stored in the memory 1303, to control the transceiver to receive a signal and send a signal, to complete the steps performed by the terminal in the cell handover method in this application. The memory 1303 may be integrated into the processor 1301, or may be disposed separated from the processor 1301.

In an implementation, it may be considered that functions of the transceiver 1302 are implemented by using a transceiver circuit or a dedicated transceiver chip. It may be considered that the processor 1301 is implemented by using a dedicated processing chip, a processing circuit, a processor, or a general-purpose chip.

The processor may be a central processing unit (central processing unit, CPU), a network processor (network processor, NP), or a combination of the CPU and the NP.

The processor may further include a hardware chip or another general-purpose processor. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic array (field programmable gate array, FPGA), a generic array logic (generic array logic, GAL) and another programmable logic device, a discrete gate or a transistor logic device, a discrete hardware component, or any combination thereof. The general-purpose processor may be a microprocessor, or the processor may be any conventional processor, or the like.

It should be further understood that the memory in the implementations of this application may be a volatile memory or a nonvolatile memory, or may include the volatile memory and the nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory described in this application aims to include but is not limited to these memories and any memory of another proper type.

An implementation of this application provides a computer storage medium. The computer storage medium stores a computer program, and the computer program includes instructions used to perform the foregoing cell handover method.

An implementation of this application provides a computer program product including instructions. When the computer program product runs on a computer, the computer is enabled to perform the foregoing cell handover method.

Persons of ordinary skill in the art may be aware that units and algorithm steps in the examples described with reference to the implementations disclosed in this specification may be implemented by electronic hardware or a combination of computer software and electronic hardware. Whether the functions are performed by hardware or software depends on particular applications and design constraint conditions of the technical solutions. Persons skilled in the art may use different methods to implement the described functions of each particular application, but it should not be considered that the implementation goes beyond the scope of this application.

It may be clearly understood by persons skilled in the art that, for the purpose of convenient and brief description, for a detailed working process of the foregoing system, apparatus, and unit, refer to a corresponding process in the foregoing method implementations. Details are not described herein again.

In the implementations provided in this application, it should be understood that the described apparatus implementations are merely examples. For example, the unit division is merely logical function division and may be other division in actual implementation, for example, a plurality of units or components may be combined or integrated into another system, or some features may be ignored or not performed. In addition, the displayed or discussed mutual communication connections may be implemented through some interfaces. The indirect couplings or communication connections between the apparatuses or units may be implemented in electronic, mechanical, or other forms.

In addition, units in the apparatus implementations of this application may be integrated into one processing unit, or each of the units may exist alone physically, or two or more units may be integrated into one unit.

It may be understood that, the processor in the implementations of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

All or some of the methods in the implementations of this application may be implemented by software, hardware, firmware, or any combination thereof. When software is used to implement the implementations, the implementations may be implemented completely or partially in a form of a computer program product. The computer program product includes one or more computer programs or instructions. When the computer programs or instructions are loaded and executed on the computer, the procedure or functions according to the implementations of this application are all or partially generated. The computer may be a general-purpose computer, a dedicated computer, a computer network, or other programmable apparatuses. The computer programs or instructions may be stored in a computer-readable storage medium, or may be transmitted by using the computer-readable storage medium. The computer-readable storage medium may be any usable medium accessible by a computer, or a data storage device, such as a server, integrating one or more usable media. The usable medium may be a magnetic medium such as a floppy disk, a hard disk, or a magnetic tape, or may be an optical medium such as a CD-ROM or a DVD, or may be a semiconductor medium such as a solid-state drive (solid-state drive, SSD), a random access memory (random access memory, RAM), a read-only memory (read-only memory, ROM), or a register.

Persons skilled in the art should understand that the implementations of this application may be provided as a method, a system, or a computer program product. Therefore, this application may use a form of a hardware-only implementation, a software-only implementation, or an implementation with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to the implementations of this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of another programmable data processing device generate an apparatus for implementing a specific function in one or more processes in the flowcharts and/or in one or more blocks in the block diagrams.

The computer program instructions may be stored in a computer readable memory that can instruct the computer or another programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

The computer program instructions may be loaded onto the computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

In accordance with various implementations described above, the following advantageous effects can be achieved.

The satellite may send one or more trigger conditions for conditional handover and the random access preamble to the terminal in advance. In this way, the terminal determines the first cell in one or more cells meeting the trigger conditions for conditional handover.

For example, the satellite may obtain the terminal information in the following manner: The satellite determines the terminal information based on a stored correspondence between a random access preamble and terminal information; the satellite determines a terminal identifier based on the random access preamble, and determines the terminal information based on a stored correspondence between a terminal identifier and terminal information; or the satellite determines a terminal identifier based on the random access preamble, and indicates a terminal corresponding to the terminal identifier to report the terminal information.

In a cell handover process, the terminal can determine only a most suitable satellite based on location information of the terminal and ephemeris information of the satellite, and the determined first cell may not be a most suitable access cell. Therefore, in the method, a satellite in a satellite communication system determines the most suitable access cell for a second time. As an important network element in the satellite communication system, the satellite can provide a radio access service for the terminal and schedule a radio resource. Therefore, the satellite determines, based on the terminal information and the cell attribute information, a second cell for the terminal to finally access. Because the cell attribute information is considered in the method, compared with the first cell determined by the terminal, the second cell determined based on the terminal information and the cell attribute information is more suitable for the terminal to access, thereby ensuring that the terminal can access a most suitable cell. In addition, in the method, the satellite determines the most suitable access cell, and the satellite also does not need to send a large amount of cell attribute information to the terminal, thereby reducing signaling overheads.

Based on certain implementations, the terminal information is used to help the satellite select/assist the satellite in selecting a suitable access cell for the terminal, and the satellite determines, based on the determined terminal information and the cell attribute information, a suitable second cell for the terminal to access, so as to ensure that the terminal can access a more suitable cell.

Based on certain implementations, the terminal may indicate the satellite to select the access cell for the terminal. In this way, the satellite may determine, based on an indication of the first message and based on the terminal information and the cell attribute information, the second cell suitable for the terminal to access, so as to ensure that the terminal can access a more suitable cell.

Based on certain implementations, if the satellite does not know the terminal information or the stored terminal information is out of date, the satellite may indicate the terminal to report the terminal information. In this way, the terminal reports, based on an indication of the second message, the terminal information or other information (for example, a random access code) used to determine the terminal information, so that the satellite can determine, based on the terminal information reported by the terminal and the cell attribute information, the second cell most suitable for the terminal to access, thereby ensuring that the terminal can access a more suitable cell.

Based on certain implementations, in addition to determining the second cell suitable for the terminal to access, the satellite further determines the access information of the second cell, so as to ensure that the terminal can access a more suitable cell based on the access information of the second cell.

Based on certain implementations, the terminal performs downlink synchronization on the second cell based on the access information of the second cell that is determined by the satellite and that is suitable for the terminal to access, and sends the uplink information on the indicated resource. In this way, the terminal accesses the second cell, and the terminal accesses a more suitable cell.

The scope of protection is defined by the appended claims.

## Claims

1. A cell handover method, comprising:
sending (601), by a terminal, a random access preamble of a determined first cell to a satellite, wherein the random access preamble enables the satellite to determine terminal information;
receiving (605), by the terminal, access information that is of a second cell and that is sent by the satellite; wherein the second cell is selected by the satellite based on the terminal information and
accessing (606), by the terminal, the second cell by using the access information of the second cell;
wherein before the receiving, by the terminal, access information that is of a second cell and that is sent by the satellite, the method further comprises:
sending, by the terminal, a first message to the satellite, wherein
the first message is used to indicate to enable the satellite to select an access cell for the terminal, or
the first message comprises first indication information and the first indication information is used to indicate to enable the satellite to select the access cell for the terminal.

2. The method according to claim 1, wherein before the receiving, by the terminal, access information that is of a second cell and that is sent by the satellite, the method further comprises:
receiving, by the terminal, a second message sent by the satellite, wherein the second message is used to indicate the terminal to report the terminal information, or the second message comprises second indication information and the second indication information is used to indicate the terminal to report the terminal information; and
if determining to report the terminal information, sending, by the terminal, the terminal information to the satellite.

3. The method according to claim 1 or 2, wherein the terminal information comprises at least one of the following content: location information of the terminal, an identifier of a cell meeting a trigger condition for conditional handover, and the trigger condition.

4. The method according to claim 2 or 3, wherein the second message comprises access information of the first cell.

5. The method according to any one of claims 1 to 4, wherein the access information of the second cell comprises at least one of the following content: a TA, a UL grant, a TC-RNTI, and a third message, wherein
the third message is used for downlink synchronization;
the UL grant comprises at least one of the following information: identification information indicating whether frequency hopping is enabled in the second cell, indication information of an uplink physical uplink shared channel , PUSCH, frequency resource, indication information of an uplink PUSCH time resource, a modulation and coding scheme MCS, a PUSCH power control command, and a channel state information, CSI, request; and
the third message comprises at least one of the following information: a frequency, a subcarrier spacing, and a guard interval of the second cell, a time domain location that is of a primary synchronization signal, PSS / secondary synchronization signal, SSS, of the second cell and that is relative to the first cell, reserved time, and the indication information of the uplink PUSCH time resource of the UL grant.

6. The method according to claim 5, wherein the accessing, by the terminal, the second cell by using the access information of the second cell comprises:
performing, by the terminal, downlink synchronization on the second cell by using the third message, and sending uplink information on the uplink PUSCH frequency resource and/or time resource indicated by the UL grant.

7. A terminal (100), comprising:
a transceiver unit (1010), configured to: send a random access preamble of a determined first cell to a satellite, wherein the random access preamble enables the satellite to determine terminal information; and receive access information that is of a second cell wherein the second cell is selected by the satellite based on the terminal information and that is sent by the satellite; and
a processing unit (1020), configured to enable the terminal to access the second cell by using the access information of the second cell;
wherein the transceiver unit is further configured to send a first message to the satellite, wherein
the first message is used to indicate to enable the satellite to select an access cell for the terminal, or
the first message comprises first indication information and the first indication information is used to indicate to enable the satellite to select the access cell for the terminal.

8. The terminal according to claim 7, wherein the transceiver unit is further configured to: receive a second message sent by the satellite, wherein the second message is used to indicate the terminal to report the terminal information, or the second message comprises second indication information and the second indication information is used to indicate the terminal to report the terminal information; and if determining to report the terminal information, send the terminal information to the satellite.

9. The terminal according to claim 7 or 8, wherein the terminal information comprises at least one of the following content: location information of the terminal, an identifier of a cell meeting a trigger condition for conditional handover, and the trigger condition.

10. The terminal according to claim 8 or 9, wherein the second message comprises access information of the first cell.

11. The terminal according to any one of claims 7 to 10, wherein the access information of the second cell comprises at least one of the following content: a TA, a UL grant, a TC-RNTI, and a third message, wherein
the third message is used for downlink synchronization;
the UL grant comprises at least one of the following information: identification information indicating whether frequency hopping is enabled in the second cell, indication information of an uplink physical uplink shared channel, PUSCH, frequency resource, indication information of an uplink PUSCH time resource, a modulation and coding scheme, MCS, a PUSCH power control command, and a channel state information, CSI, request; and
the third message comprises at least one of the following information: a frequency, a subcarrier spacing, and a guard interval of the second cell, a time domain location that is of a primary synchronization signal, PSS/ secondary synchronization signal, SSS, of the second cell and that is relative to the first cell, reserved time, and the indication information of the uplink PUSCH time resource of the UL grant.

12. The terminal according to claim 11, wherein the processing unit is specifically configured to: perform downlink synchronization on the second cell by using the third message, and send uplink information on the uplink PUSCH frequency resource and/or time resource indicated by the UL grant.

13. A cell handover method, comprising:
receiving (602), by a satellite, a random access preamble that is of a first cell and that is sent by a terminal, wherein the random access preamble is used to determine terminal information;
determining (603), by the satellite, based on the terminal information and cell attribute information that is of the satellite, a second cell most suitable for the terminal to access; and
sending (604), by the satellite, access information of the second cell to the terminal.
wherein before the determining, by the satellite based on the terminal information and cell attribute information that is of the satellite, a second cell most suitable for the terminal to access, the method further comprises:
receiving, by the satellite, a first message sent by the terminal, wherein
the first message is used to indicate to enable the satellite to select an access cell for the terminal, or
the first message comprises first indication information and the first indication information is used to indicate to enable the satellite to select the access cell for the terminal.

14. A satellite (110), comprising:
a transceiver unit (1110), configured to receive a random access preamble that is of a first cell and that is sent by a terminal, wherein the random access preamble is used to determine terminal information; and
a processing unit (1120), configured to determine, based on the terminal information and cell attribute information that is of the satellite, a second cell most suitable for the terminal to access, wherein the terminal information is used for cell handover of the terminal, wherein
the transceiver unit is further configured to send access information of the second cell to the terminal;
wherein the transceiver unit is further configured to receive a first message sent by the terminal, wherein
the first message is used to indicate to enable the satellite to select an access cell for the terminal, or
the first message comprises first indication information and the first indication information is used to indicate to enable the satellite to select the access cell for the terminal.

15. A computer-readable storage medium, comprising:
a first set of instructions, which when executed by a terminal causes the terminal to perform the method according to any one of claims 1 to 6; or
a second set of instructions, which when executed by a satellite causes the satellite to perform the method according to claim 13.

## Patentansprüche

1. Zellübergabeverfahren, umfassend:
Senden (601), durch ein Endgerät, einer Zufallszugriffspräambel einer bestimmten ersten Zelle an einen Satelliten, wobei die Zufallszugriffspräambel den Satelliten in die Lage versetzt, Endgeräteinformationen zu bestimmen;
Empfangen (605), durch das Endgerät, von Zugriffsinformationen, die zu einer zweiten Zelle gehören und die durch den Satelliten gesendet werden; wobei die zweite Zelle durch den Satelliten auf der Grundlage der Endgeräteinformationen ausgewählt wird und
Zugreifen (606) durch das Endgerät auf die zweite Zelle unter Verwendung der Zugriffsinformationen der zweiten Zelle;
wobei das Verfahren vor dem Empfangen, durch das Endgerät, von Zugriffsinformationen, die zu einer zweiten Zelle gehören und die durch den Satelliten gesendet werden, ferner Folgendes umfasst:
Senden, durch das Endgerät, einer ersten Nachricht an den Satelliten, wobei
die erste Nachricht dazu verwendet wird, anzuzeigen, den Satelliten in die Lage zu versetzen, eine Zugriffszelle für das Endgerät auszuwählen, oder
die erste Nachricht erste Anzeigeinformationen umfasst und die ersten Anzeigeinformationen dazu verwendet werden, anzuzeigen, den Satelliten in die Lage zu versetzen, die Zugriffszelle für das Endgerät auszuwählen.

2. Verfahren nach Anspruch 1, wobei das Verfahren vor dem Empfangen, durch das Endgerät, von Zugriffsinformationen, die zu der zweiten Zelle gehören und die durch den Satelliten gesendet werden, ferner Folgendes umfasst:
Empfangen, durch das Endgerät, einer zweiten Nachricht, die durch den Satelliten gesendet wird, wobei die zweite Nachricht dazu verwendet wird, dem Endgerät anzuzeigen, die Endgeräteinformationen zu melden, oder die zweite Nachricht zweite Anzeigeinformationen umfasst und die zweiten Anzeigeinformationen dazu verwendet werden, dem Endgerät anzuzeigen, die Endgeräteinformationen zu melden; und
falls bestimmt wird, die Endgeräteinformationen zu melden, Senden durch das Endgerät, der Endgeräteinformationen, an den Satelliten.

3. Verfahren nach Anspruch 1 oder 2, wobei die Endgeräteinformationen mindestens einen der folgenden Inhalte umfassen: Standortinformationen des Endgeräts, eine Kennung einer Zelle, die eine Auslösebedingung für bedingte Übergabe erfüllt, und die Auslösebedingung.

4. Verfahren nach Anspruch 2 oder 3, wobei die zweite Nachricht Zugriffsinformationen der ersten Zelle umfasst.

5. Verfahren nach einem der Ansprüche 1 bis 4, wobei die Zugriffsinformationen der zweiten Zelle mindestens einen der folgenden Inhalte umfassen: einen TA, eine UL-Gewährung, eine TC-RNTI und eine dritte Nachricht, wobei
die dritte Nachricht für Downlink-Synchronisierung verwendet wird;
die UL-Gewährung mindestens eine der folgenden Informationen umfasst: Identifizierungsinformationen, die anzeigen, ob Frequenzsprung in der zweiten Zelle aktiviert ist, Anzeigeinformationen einer Uplink-Frequenzressource eines gemeinsam genutzten physikalischen Uplink-Kanals, PUSCH, Anzeigeinformationen einer Uplink-PUSCH-Zeitressource, ein Modulations- und Codierungsschema, MCS, einen PUSCH-Leistungssteuerungsbefehl und eine Kanalzustandsinformationsanforderung, CSI-Anforderung; und
die dritte Nachricht mindestens eine der folgenden Informationen umfasst: eine Frequenz, einen Unterträgerabstand und ein Schutzintervall der zweiten Zelle, eine Zeitbereichsposition, die zu einem primären Synchronisierungssignal, PSS/sekundären Synchronisierungssignal, SSS, der zweiten Zelle gehört und die relativ zu der ersten Zelle ist, reservierte Zeit und die Anzeigeinformationen der Uplink-PUSCH-Zeitressource der UL-Gewährung.

6. Verfahren nach Anspruch 5, wobei das Zugreifen, durch das Endgerät, auf die zweite Zelle unter Verwendung der Zugriffsinformationen der zweiten Zelle Folgendes umfasst:
Durchführen, durch das Endgerät, einer Downlink-Synchronisierung auf der zweiten Zelle unter Verwendung der dritten Nachricht und Senden von Uplink-Informationen über die Uplink-PUSCH-Frequenzressource und/oder die Zeitressource, die durch die UL-Gewährung angezeigt wird.

7. Endgerät (100), umfassend:
eine Sende-/Empfangseinheit (1010), die zu Folgendem konfiguriert ist: Senden einer Zufallszugriffspräambel einer bestimmten ersten Zelle an einen Satelliten, wobei die Zufallszugriffspräambel den Satelliten in die Lage versetzt, Endgeräteinformationen zu bestimmen; und Empfangen von Zugriffsinformationen, die zu einer zweiten Zelle gehören, wobei die zweite Zelle durch den Satelliten auf der Grundlage der Endgeräteinformationen ausgewählt wird und die durch den Satelliten gesendet wird; und
eine Verarbeitungseinheit (1020), die dazu konfiguriert ist, das Endgerät in die Lage zu versetzen, auf die zweite Zelle unter Verwendung der Zugriffsinformationen der zweiten Zelle zuzugreifen;
wobei die Sende-/Empfangseinheit ferner dazu konfiguriert ist, eine erste Nachricht an den Satelliten zu senden, wobei die erste Nachricht dazu verwendet wird, anzuzeigen, den Satelliten in die Lage zu versetzen, eine Zugriffszelle für das Endgerät auszuwählen, oder
die erste Nachricht erste Anzeigeinformationen umfasst und die ersten Anzeigeinformationen dazu verwendet werden, anzuzeigen, den Satelliten in die Lage zu versetzen, die Zugriffszelle für das Endgerät auszuwählen.

8. Endgerät nach Anspruch 7, wobei die Sende-/Empfangseinheit ferner zu Folgendem konfiguriert ist: Empfangen einer zweiten Nachricht, die durch den Satelliten gesendet wird, wobei die zweite Nachricht dazu verwendet wird, dem Endgerät anzuzeigen, die Endgeräteinformationen zu melden, oder die zweite Nachricht zweite Anzeigeinformationen umfasst und die zweiten Anzeigeinformationen dazu verwendet werden, dem Endgerät anzuzeigen, die Endgeräteinformationen zu melden; und wenn bestimmt wird, die Endgeräteinformationen zu melden, Senden der Endgeräteinformationen an den Satelliten.

9. Endgerät nach Anspruch 7 oder 8, wobei die Endgeräteinformationen mindestens einen der folgenden Inhalte umfassen: Standortinformationen des Endgeräts, eine Kennung einer Zelle, die eine Auslösebedingung für bedingte Übergabe erfüllt, und die Auslösebedingung.

10. Endgerät nach Anspruch 8 oder 9, wobei die zweite Nachricht Zugriffsinformationen der ersten Zelle umfasst.

11. Endgerät nach einem der Ansprüche 7 bis 10, wobei die Zugriffsinformationen der zweiten Zelle mindestens einen der folgenden Inhalte umfassen: einen TA, eine UL-Gewährung, eine TC-RNTI und eine dritte Nachricht, wobei
die dritte Nachricht für Downlink-Synchronisierung verwendet wird;
die UL-Gewährung mindestens eine der folgenden Informationen umfasst: Identifizierungsinformationen, die anzeigen, ob Frequenzsprung in der zweiten Zelle aktiviert ist, Anzeigeinformationen einer Uplink-Frequenzressource eines gemeinsam genutzten physikalischen Uplink-Kanals, PUSCH, Anzeigeinformationen einer Uplink-PUSCH-Zeitressource, ein Modulations- und Codierungsschema, MCS, einen PUSCH-Leistungssteuerungsbefehl und eine Kanalzustandsinformationsanforderung, CSI-Anforderung; und
die dritte Nachricht mindestens eine der folgenden Informationen umfasst: eine Frequenz, einen Unterträgerabstand und ein Schutzintervall der zweiten Zelle, eine Zeitbereichsposition, die zu einem primären Synchronisierungssignal, PSS/sekundären Synchronisierungssignal, SSS, der zweiten Zelle gehört und die relativ zu der ersten Zelle ist, reservierte Zeit und die Anzeigeinformationen der Uplink-PUSCH-Zeitressource der UL-Gewährung.

12. Endgerät nach Anspruch 11, wobei die Verarbeitungseinheit speziell zu Folgendem konfiguriert ist: Durchführen einer Downlink-Synchronisierung auf der zweiten Zelle unter Verwendung der dritten Nachricht und Senden von Uplink-Informationen über die Uplink-PUSCH-Frequenzressource und/oder die Zeitressource, die durch die UL-Gewährung angezeigt wird.

13. Zellübergabeverfahren, umfassend:
Empfangen (602), durch einen Satelliten, einer Zufallszugriffspräambel, die zu einer ersten Zelle gehört und die durch ein Endgerät gesendet wird, wobei die Zufallszugriffspräambel dazu verwendet wird, Endgeräteinformationen zu bestimmen;
Bestimmen (603), durch den Satelliten auf der Grundlage der Endgeräteinformationen und der Zellenattributinformationen, die zu dem Satelliten gehören, einer zweiten Zelle, die dazu am geeignetsten ist, dass das Endgerät auf diese zugreift; und Senden (604), durch den Satelliten, von Zugriffsinformationen der zweiten Zelle an das Endgerät,
wobei das Verfahren vor dem Bestimmen, durch den Satelliten auf der Grundlage der Endgeräteinformationen und der Zellenattributinformationen, die zu dem Satelliten gehören, einer zweiten Zelle, die dazu am geeignetsten ist, dass das Endgerät auf diese zugreift, ferner Folgendes umfasst:
Empfangen, durch den Satelliten, einer ersten Nachricht, die durch das Endgerät gesendet wird, wobei
die erste Nachricht dazu verwendet wird, anzuzeigen, den Satelliten in die Lage zu versetzen, eine Zugriffszelle für das Endgerät auszuwählen, oder
die erste Nachricht erste Anzeigeinformationen umfasst und die ersten Anzeigeinformationen dazu verwendet werden, anzuzeigen, den Satelliten in die Lage zu versetzen, die Zugriffszelle für das Endgerät auszuwählen.

14. Satellit (110), umfassend:
eine Sende-/Empfangseinheit (1110), die dazu konfiguriert ist, eine Zufallszugriffspräambel, die zu einer ersten Zelle gehört und die durch ein Endgerät gesendet wird, zu empfangen, wobei die Zufallszugriffspräambel dazu verwendet wird, Endgeräteinformationen zu bestimmen; und
eine Verarbeitungseinheit (1120), die dazu konfiguriert ist, auf der Grundlage der Endgeräteinformationen und der Zellenattributinformationen, die zu dem Satelliten gehören, eine zweite Zelle zu bestimmen, die dazu am geeignetsten ist, dass das Endgerät auf diese zugreift, wobei die Endgeräteinformationen zur Zellübergabe des Endgeräts verwendet werden, wobei
die Sende-/Empfangseinheit ferner dazu konfiguriert ist, Zugriffsinformationen der zweiten Zelle an das Endgerät zu senden;
wobei die Sende-/Empfangseinheit ferner dazu konfiguriert ist, eine erste Nachricht, die durch das Endgerät gesendet wird, zu empfangen, wobei
die erste Nachricht dazu verwendet wird, anzuzeigen, den Satelliten in die Lage zu versetzen, eine Zugriffszelle für das Endgerät auszuwählen, oder
die erste Nachricht erste Anzeigeinformationen umfasst und die ersten Anzeigeinformationen dazu verwendet werden, anzuzeigen, den Satelliten in die Lage zu versetzen, die Zugriffszelle für das Endgerät auszuwählen.

15. Computerlesbares Speichermedium, umfassend:
einen ersten Satz von Anweisungen, die, wenn sie durch ein Endgerät ausgeführt werden, das Endgerät dazu veranlassen, das Verfahren nach einem der Ansprüche 1 bis 6 durchzuführen; oder
einen zweiten Satz von Anweisungen, die, wenn sie durch einen Satelliten ausgeführt werden, den Satelliten dazu veranlassen, das Verfahren nach Anspruch 13 durchzuführen.

## Revendications

1. Procédé de transfert intercellulaire, comprenant :
l'envoi (601), par un terminal, d'un préambule d'accès aléatoire d'une première cellule déterminée à un satellite, dans lequel le préambule d'accès aléatoire permet au satellite de déterminer des informations de terminal ;
la réception (605), par le terminal, d'informations d'accès provenant d'une seconde cellule et envoyées par le satellite ; dans lequel la seconde cellule est sélectionnée par le satellite sur la base des informations de terminal et
l'accès (606), par le terminal, à la seconde cellule à l'aide des informations d'accès de la seconde cellule ;
dans lequel avant la réception, par le terminal, d'informations d'accès provenant d'une seconde cellule et envoyées par le satellite, le procédé comprend également :
l'envoi, par le terminal, d'un premier message au satellite, dans lequel
le premier message est utilisé pour indiquer de permettre au satellite de sélectionner une cellule d'accès pour le terminal, ou
le premier message comprend des premières informations d'indication et les premières informations d'indication sont utilisées pour indiquer de permettre au satellite de sélectionner la cellule d'accès pour le terminal.

2. Procédé selon la revendication 1, dans lequel avant la réception, par le terminal, d'informations d'accès provenant d'une seconde cellule et qui sont envoyées par le satellite, le procédé comprend également :
la réception, par le terminal, d'un deuxième message envoyé par le satellite, dans lequel le deuxième message est utilisé pour indiquer au terminal de signaler les informations de terminal, ou le deuxième message comprend des secondes informations d'indication et les secondes informations d'indication sont utilisées pour indiquer au terminal de signaler les informations de terminal ; et
s'il est déterminé de signaler les informations de terminal, l'envoi, par le terminal, des informations de terminal au satellite.

3. Procédé selon la revendication 1 ou 2, dans lequel les informations de terminal comprennent au moins l'un des contenus suivants : des informations de localisation du terminal, un identifiant d'une cellule répondant à une condition de déclenchement pour un transfert conditionnel et la condition de déclenchement.

4. Procédé selon la revendication 2 ou 3, dans lequel le deuxième message comprend des informations d'accès de la première cellule.

5. Procédé selon l'une quelconque des revendications 1 à 4, dans lequel les informations d'accès de la seconde cellule comprennent au moins l'un des contenus suivants : un TA, une autorisation UL, un TC-RNTI et un troisième message, dans lequel le troisième message est utilisé pour la synchronisation en liaison descendante ;
l'autorisation UL comprend au moins l'une des informations suivantes : des informations d'identification indiquant si le saut de fréquence est activé dans la seconde cellule, des informations d'indication d' une ressource de fréquence d'un canal physique partagé de liaison montante, PUSCH, des informations d'indication d'une ressource temporelle PUSCH de liaison montante, un schéma de modulation et de codage MCS, une commande de contrôle de puissance PUSCH et une demande d'informations d'état de canal, CSI ; et
le troisième message comprend au moins l'une des informations suivantes : une fréquence, un espacement de sous-porteuse et un intervalle de garde de la seconde cellule, une localisation de domaine temporel provenant d'un signal de synchronisation primaire, PSS/signal de synchronisation secondaire, SSS, de la seconde cellule et qui est relatif à la première cellule, un temps réservé et les informations d'indication de la ressource temporelle PUSCH de liaison montante de l'autorisation UL.

6. Procédé selon la revendication 5, dans lequel l'accès, par le terminal, à la seconde cellule à l'aide des informations d'accès de la seconde cellule comprend :
le fait d'effectuer, par le terminal, une synchronisation de liaison descendante sur la seconde cellule à l'aide du troisième message, et l'envoi d'informations de liaison montante sur la ressource de fréquence PUSCH de liaison montante et/ou la ressource temporelle indiquée par l'autorisation UL.

7. Terminal (100), comprenant :
une unité d'émission-réception (1010), configurée pour : envoyer un préambule d'accès aléatoire d'une première cellule déterminée à un satellite, dans lequel le préambule d'accès aléatoire permet au satellite de déterminer les informations de terminal ;
et recevoir des informations d'accès provenant d'une seconde cellule, dans lequel la seconde cellule est sélectionnée par le satellite sur la base des informations de terminal et qui sont envoyées par le satellite ; et
une unité de traitement (1020), configurée pour permettre au terminal d'accéder à la seconde cellule à l'aide des informations d'accès de la seconde cellule ;
dans lequel l'unité d'émission-réception est également configurée pour envoyer un premier message au satellite, dans lequel le premier message est utilisé pour indiquer de permettre au satellite de sélectionner une cellule d'accès pour le terminal, ou
le premier message comprend des premières informations d'indication et les premières informations d'indication sont utilisées pour indiquer de permettre au satellite de sélectionner la cellule d'accès pour le terminal.

8. Terminal selon la revendication 7, dans lequel l'unité d'émission-réception est également configurée pour : recevoir un deuxième message envoyé par le satellite, dans lequel le deuxième message est utilisé pour indiquer au terminal de signaler les informations de terminal, ou le deuxième message comprend des secondes informations d'indication et les secondes informations d'indication sont utilisées pour indiquer au terminal de signaler les informations de terminal ; et s'il est déterminé de signaler les informations de terminal, envoyer les informations de terminal au satellite.

9. Terminal selon la revendication 7 ou 8, dans lequel les informations de terminal comprennent au moins l'un des contenus suivants : des informations de localisation du terminal, un identifiant d'une cellule répondant à une condition de déclenchement pour un transfert conditionnel et la condition de déclenchement.

10. Terminal selon la revendication 8 ou 9, dans lequel le deuxième message comprend des informations d'accès de la première cellule.

11. Terminal selon l'une quelconque des revendications 7 à 10, dans lequel les informations d'accès de la seconde cellule comprennent au moins l'un des contenus suivants : un TA, une autorisation UL, un TC-RNTI et un troisième message, dans lequel le troisième message est utilisé pour la synchronisation en liaison descendante ;
l'autorisation UL comprend au moins l'une des informations suivantes : des informations d'identification indiquant si le saut de fréquence est activé dans la seconde cellule, des informations d'indication d' une ressource de fréquence d'un canal physique partagé de liaison montante, PUSCH, des informations d'indication d'une ressource temporelle PUSCH de liaison montante, un schéma de modulation et de codage, MCS, une commande de contrôle de puissance PUSCH et une demande d'informations d'état de canal, CSI ; et
le troisième message comprend au moins l'une des informations suivantes : une fréquence, un espacement de sous-porteuse et un intervalle de garde de la seconde cellule, une localisation de domaine temporel provenant d'un signal de synchronisation primaire, PSS/signal de synchronisation secondaire, SSS, de la seconde cellule et qui est relatif à la première cellule, un temps réservé et les informations d'indication de la ressource temporelle PUSCH de liaison montante de l'autorisation UL.

12. Terminal selon la revendication 11, dans lequel l'unité de traitement est spécifiquement configurée pour : effectuer une synchronisation de liaison descendante sur la seconde cellule à l'aide du troisième message, et envoyer des informations de liaison montante sur la ressource de fréquence PUSCH de liaison montante et/ou la ressource temporelle indiquée par l'autorisation UL.

13. Procédé de transfert intercellulaire, comprenant :
la réception (602), par un satellite, d'un préambule d'accès aléatoire provenant d'une première cellule et qui est envoyé par un terminal, dans lequel le préambule d'accès aléatoire est utilisé pour déterminer des informations de terminal ;
la détermination (603), par le satellite, sur la base des informations de terminal et des informations d'attribut de cellule provenant du satellite, d'une seconde cellule la plus appropriée à l'accès du terminal ; et
l'envoi (604), par le satellite, d'informations d'accès de la seconde cellule au terminal.
dans lequel avant la détermination, par le satellite sur la base des informations de terminal et des informations d'attribut de cellule provenant du satellite, d'une seconde cellule la plus appropriée pour l'accès du terminal, le procédé comprend également :
la réception, par le satellite, d'un premier message envoyé par le terminal, dans lequel
le premier message est utilisé pour indiquer de permettre au satellite de sélectionner une cellule d'accès pour le terminal, ou
le premier message comprend des premières informations d'indication et les premières informations d'indication sont utilisées pour indiquer de permettre au satellite de sélectionner la cellule d'accès pour le terminal.

14. Satellite (110), comprenant :
une unité d'émission-réception (1110), configurée pour recevoir un préambule d'accès aléatoire provenant d'une première cellule et qui est envoyé par un terminal, dans lequel le préambule d'accès aléatoire est utilisé pour déterminer les informations de terminal ; et
une unité de traitement (1120), configurée pour déterminer, sur la base des informations de terminal et des informations d'attribut de cellule provenant du satellite, une seconde cellule la plus appropriée à l'accès du terminal, dans lequel les informations de terminal sont utilisées pour le transfert intercellulaire du terminal, dans lequel
l'unité d'émission-réception est également configurée pour envoyer des informations d'accès de la seconde cellule au terminal ;
dans lequel l'unité d'émission-réception est également configurée pour recevoir un premier message envoyé par le terminal, dans lequel
le premier message est utilisé pour indiquer de permettre au satellite de sélectionner une cellule d'accès pour le terminal, ou
le premier message comprend des premières informations d'indication et les premières informations d'indication sont utilisées pour indiquer de permettre au satellite de sélectionner la cellule d'accès pour le terminal.

15. Support de stockage lisible par ordinateur, comprenant :
un premier ensemble d'instructions qui, lorsqu'elles sont exécutées par un terminal, amènent le terminal à mettre en œuvre le procédé selon l'une quelconque des revendications 1 à 6 ; ou
un second ensemble d'instructions qui, lorsqu'elles sont exécutées par un satellite, amènent le satellite à mettre en œuvre le procédé selon la revendication 13.
